# FASCICULE DE BREVET EUROPEEN

(11) **EP 2 208 310 B1**
(45) Date de publication et mention de la délivrance du brevet: **31.07.2013**
(21) Numéro de dépôt: 08805049.7
(22) Date de dépôt: 03.10.2008
(51) Int. Cl.: H04L 12/18

(54) **Procédé, station de base et serveur MBS pour la fourniture dynamique de flux de service à des terminaux connectés à une zone MBS**
Verfahren zur dynamischen Lieferung eines Dienstflusses zu Kommunikationsendgeräten, die mit einem MBS-Bereich in einem lokalen drahtlosen Kommunikationsnetz verbunden sind, und diesbezügliche Basisstation und diesbezüglicher MBS-Server
Method for the dynamic supply of a service flow to communication terminals connected to an MBS area in a local wireless communication network, and related base station and MBS server

(30) Priorité: 05.10.2007 FR 0758080
(43) Date de publication de la demande: 21.07.2010
(73) Titulaire: Alcatel Lucent, 75007 Paris (FR)
(72) Inventeur: BALAGEAS, Carine, F-91620 Nozay (FR); CONTE, Alberto, F-91620 Nozay (FR)
(74) Mandataire: Sciaux, Edmond
(86) Numéro de dépôt international: PCT/EP2008/063292
(87) Numéro de publication internationale: WO 2009/043935

(56) Documents cités:
- WO-A-2004/112314
- WO-A-2006/070992
- WO-A-2008/004846
- US-A1- 2007 189 162
- US-A1- 2007 211 726

## Description

L'invention concerne les réseaux locaux de communication sans fil ou WLAN (« Wireless Local Area Network »), et notamment les réseaux WiMAX, et plus précisément la fourniture à des terminaux de communication disposant d'une interface de communication sans fil, par voie d'ondes et au moyen de tels réseaux, de flux de service définissant des contenus MBS (« Multicast and Broadcast Service ») à diffuser.

Il est rappelé que le standard WiMAX regroupe notamment les standards 802.16 et HiperMan, ainsi que toutes leurs évolutions, et notamment 802.16e dédiée aux communications sans fil avec des terminaux mobiles (ou portables).

On entend ici par « terminal de communication» tout équipement de communication fixe ou mobile (ou portable ou encore cellulaire) capable d'échanger des contenus avec un autre terminal de communication) ou équipement de réseau, via un réseau local de communication sans fil. Par conséquent, il pourra par exemple s'agir d'un téléphone fixe ou mobile (ou cellulaire), d'un ordinateur fixe ou portable, d'un assistant personel numérique (ou PDA), d'un récepteur de contenus multimédia (par exemple un décodeur, une passerelle résidentielle (ou « residential gateway ») ou un STB («Set-Top Box »)), dès lors qu'il est équipé de moyens de communication par voie d'ondes.

Comme le sait l'homme de l'art, certains réseaux locaux de communication sans fil, et notamment ceux de type WiMAX répondant au standard 802.16e, permettent d'offrir aux terminaux (de communication) qui sont connectés à leurs réseaux d'accès un service de diffusion de données (ou contenus) appelé MBS (« Multicast and Broadcast Service »). US 2007/0211726 divulgue un tel réseau. Ce services MBS peut, dans le cas d'une diffusion de type broadcast (et non multicast), être mis en oeuvre grâce à un mode d'accès par stations de base (ou BS) multiples (ou « Multi-BS access mode ») et un regroupement de stations de base (BS) au sein de zones géographiques de type zones MBS (ou « MBS zones »). Plus précisément, dans le mode précité un même flux de service MBS peut être transmis vers des terminaux par un ensemble de stations de base qui utilisant une même paire d'informations CID (« Connection Identifier ») et SA (« Security Association ») et qui constituent ensemble une zone MBS associée à un identifiant de zone (« MBS_Zoned_id») qu'elles diffusent.

La combinaison de ce mode d'accès et de cette défnition de zones MBS offre plusieurs avantages. En effet, lorsque des terminaux sont à l'intérieur d'une zone MBS, ils n'ont pas besoin de s'enregistrer auprès de chacune des stations de base de cette zone MBS. Il suffit qu'ils s'enregistrent lorsqu'ils accèdent au réseau par l'une des stations de base de ses zones MBS afin d'obtenir les paires d'informations <CID, SA> de cette zone MBS qui leur permettent ensuite de recevoir des flux de service définissant certains au moins des contenus MBS qui sont diffusés localement par toutes les stations de base de cette zone MBS. Un terminal peut alors demeurer en mode d'attente (ou « idle ») tout en écoutant le trafic sur la liaison descendante (ou «downlink») pour recevoir les contenus diffusés, permettant ainsi d'économiser de la puissance.

Pour que le service MBS précité puisse être utilisé dans une zone MBS, deux conditions doivent être satisfaites : chaque station de base de la zone MBS doit disposer des données qui définissent les flux de service définissant les contenus MBS à diffuser de manière à pouvoir créer pour les terminaux des connexions de diffusion pour chacun de ces flux de service, et chaque terminal doit disposer des données qui définissent les flux de service qu'il est autorisé à recevoir en mode de diffusion (« broadcast ») de manière à pouvoir les recevoir au moyen des connexions de diffiusion correspondantes.

On entend par « données qui définissent un flux de service » tout ou parte d'un « classificateur IP » (ou « IP Classifier ») constitué au moins d'une paire d`informations d'identifiant de connexion de diffusion (CID) et de sécurité (SA) et d'une adresse de diffusion (« Multicast IP **@** Mi »), soit <ClDi,SAi> ↔ multicast IP @ Mi (où l'indice i désigne un flux de service et donc également un contenu MBS), ainsi qu'éventuellement d'un identifiant de zone (MBS_Zone_id) de la zone MBS concernée.

Pour satisfaire les deux conditions précitées, il est possible de fournir les classificateurs IP aux stations de base d'une zone MBS et aux terminaux connectés à cette zone MBS, de façon statique et séparément.

Par exemple, on peut fournir les classificateurs IP relatifs aux services MBS aux terminaux lors de leur fabrication ou par téléchargement ou encore au moyen d'une technique de type OPTA (« Over the Air »). Mais cela est contraignant puisque cela impose de stocker dans chaque terminal tous les classificateurs IP connus à un instant donné, ce qui occupe de façon conséquente la mémoire du terminal. En outre, chaque évolution/modification de classificateurs IP nécessite une mise à jour des informations stockées dans les terminaux. De plus, les protocoles du type TR-069 et OMA-DM relatifs à la norme OTA ne sont pas encore assez matures pour envisager ce type de mise à jour.

Les classificateurs IP relatifs aux services MBS peuvent être par exemple fournis aux stations de base par le serveur d'opération et de maintenance (« O&M ») du réseau. Mais cela s'avère complexe, peu flexible et consommateur de ressources réseau.

L'invention a donc pour but d'améliorer la situation au moyen d'une fourniture dynamique de données.

Elle propose à cet effet un procédé, une station de base et un serveur de service MBS selon les revendications indépendantes ci-après.

L'invention est particulièrement bien adaptée, bien que de façon non exclusive, aux réseaux locaux de communication sans fil de type WiMAX.

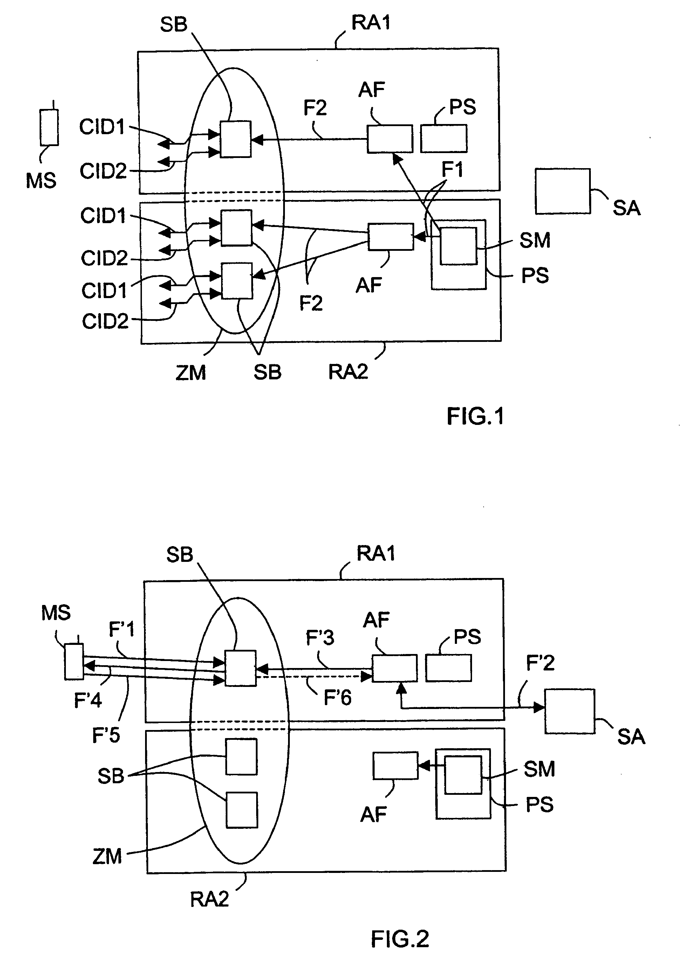

D'autres caractéristiques et avantages de l'invention apparaîtront à l'examen de la description détaillée ci-après, et des dessins annexés, sur lesquels :
- ta figure 1 illustre de façon très schématique et fonctionnelle les principales étapes de la phase de fourniture de classificateurs IP à des stations de base d'une zone MBS d'un réseaux local de communication sans fil propre à mettre en oeuvre l'invention, et
- la figure 2 ittustre de façon très schématique et fonctionnelle les principales étapes de la phase de fourniture de classificateurs IP à un terminal mobile connecté à une station de base de la zone MBS du réseau local de communication sans fil de la figure 1.

Les dessins annexés pourront non seulement servir à compléter l'invention, mais aussi contribuer à sa définition, le cas échéant.

L'invention a pour objet de permettre la fourniture à des terminaux de communication, par voie d'ondes et au moyen d'un réseau local de communication sans fil, de données définissant les flux de service qui sont associés à des contenus MBS à diffuser.

Dans ce qui suit, on considère à titre d'exemple non limitatif que le réseau local (de communication) sans fil est de type WiMAX (regroupement des standards 802.16 et HiperMan, notamment). Mais l'invention n'est pas limitée à ce type de réseau local sans fil. Elle concerne en effet tous les réseaux locaux de communication sans fil ou WLAN (« Wireless Local Area Network »), comme par exemple les réseaux conformes aux standards IEEE 802.11a, WiFi (802.11g) et ETSI HiperLAN/2, dans lesquels sont définies des zones géographiques de type zones MBS (« Multicast and Broadcast Service ») pour la diffusion de données (ou contenus) vers des terminaux de communication grâce à un service MBS.

Par ailleurs, on considère dans ce qui suit, à titre d'exemple non limitatif, que les terminaux de communication (MS) sont des téléphonies mobiles (ou cellulaires). Mais, l'invention n'est pas limitée à ce type de terminal de communication. Elle concerne en effet tout équipement de communication radio, fixe ou mobile (ou portable au encore cellulaire), disposant d'une interface de communication sans fil et capable au moins de recevoir des données (définissant des contenus MBS, éventuellement multimédia (tels que des programmes de télévision ou de radio)) transmises par voie d'ondes. Par conséquent, il pourra également et notamment s'agir d'un ordinateur fixe ou portable, d'un assistant personne numérique (ou PDA), ou d'un récepteur de contenus multimédia (par exemple un décodeur, une passerelle résidentielle (ou « residential gateway ») ou un STB (« Set-Top Box »)), dès lors qu'il est équipé de moyens de communication (au moins pour la réception) radio ou satellitaires.

Comme cela est schématiquement et fonctionnellement illustré sur la figure 1, un réseau local sans fil (ici de type WiMAX), implémentant un service MBS, comprend au moins un réseau d'accès RAi, généralement appelé ASN (« Access Service Network »), couplé notamment à un serveur de type AAA (« Autorisation, Authentication, Accounting ») SA et auquel peuvent se connecter des terminaux MS. Dans l'exemple non limitatif illustré deux réseaux d'accès de type ASN RA1 et RA2 (i = 1 ou 2) ont été représentés. Mais, le réseau local sans fil pourrait comprendre plus de deux réseaux d'accès RAi.

Il est rappelé qu'un serveur de type AAA (SA) stocke notamment les profils de qualité de service (ou QoS) des usagers des terminaux MS qui sont clients de son réseau local sans fil.

Il est également rappelé qu'un réseau d'accès de type ASN RAi comprend notamment au moins une station de base SB, généralement appelée BS (« Base Station ») et par laquelle les terminaux MS peuvent se connecter au réseau local sans fil, une passerelle de service PS, généralement appelée ASN-GW (« ASN-GateWay »), ainsi qu'un agent d'autorisation de flux de service AF, généralement appelé SFA (« Service Flow Authorization ») et chargé, notamment, d'évaluer des requêtes de service qui émanent des usagers (clients) des terminaux MS en fonction de leurs profits de qualité de service respectifs qu'il récupère auprès du serveur de type AAA SA.

Il est également rappelé que l'on peut définir au moins une zone MBS ZM dans un réseau local sans fil. Chaque zone MBS ZM regroupe au moins une station de base SB qui appartient à au moins un réseau d'accès RAi. Dans l'exemple non limitatif illustré, la zone MBS ZM regroupe trois stations de base SB appartenant aux deux réseaux d'accès RA1 et RA2.

Par ailleurs, chaque zone MBS ZM est associée à un identifiant de zone (« MBS_Zone_id ») et contrôlée par un serveur de service MBS SM (ou « MBS Server »).

Les stations de base SB d'une zone MBS ZM sont notamment chargées de diffuser vers les terminaux MS l'identifiant de zone (MBS_Zone_id) de leur zone MBS ZM.

Un serveur de service MBS SM est un élément de réseau par lequel transitent toutes les données de trafic (notamment les contenus à diffuser) qui sont destinées à la zone MBS ZM qu'il contrôle et qui est couplé à chaque agent d'autorisation de flux de service AF (SFA) dont le réseau d'accès RAi comprend une station de base SB faisant partie de la zone MBS ZM qu'il contrôle. Il est notamment chargé d'attribuer à toutes les stations de base SB de la zone MBS ZM qu'il contrôle des paires d'informations CIDi (« Connection identifier ») et SAi (« Security Association ») (<CIDi,SAi>) associées respectivement aux flux de service (i) des différents contenus MBS (i) à diffuser. Lorsque le service MBS est mis en oeuvre grâce à un mode d'accès par stations de base multiples (ou « Multi-BS access mode »), un même flux de service MBS peut être transmis (diffusé) vers les terminaux MS par les stations de base SB d'une zone MBS qui utilisent la même paire d'informations <CIDi,SAi>.

Dans l'exemple non limitatif illustré, le serveur de service MBS SM fait partie de la passerelle de service PS du second réseau d'accès RA2. Mais, cela n'est pas obligatoire. Le serveur de service MBS SM d'une zone MBS ZM peut en effet être un élément de réseau qui constitue ou fait partie d'un équipement ou élément de réseau qui n'est pas forcément une passerelle de service PS.

L'invention propose de mettre en oeuvre, au sein du réseau local sans fil décrit ci-avant, un procédé destiné à fournir à des terminaux de communication des flux de service définissant des contenus MBS à diffuser qu'ils sont autorisés à recevoir compte tenu du profil (de qualité de service (ou QoS)) de leur usager.

Ce procédé comprend deux phases qui, comme on le verra plus lopin, peuvent être partiellement imbriquées.

La première phase est destinée à fournir dynamiquement des données définissant les flux de service qui définissent des contenus MBS à diffuser à des stations de base d'une zone MBS ZM du réseau local sans fil, pour qu'elles créent pour les terminaux MS des connexions de diffusion pour chacun de ces flux de service.

On entend ici par « connexion de diffusion» une connexion avec l'identifant CIDi destinée à diffuser un flux de service (i) correspondant à un contenu MBS (i) d'une station de base SB vers les terminaux MS qui sont dans la couverture radio de cette station de base SB.

La seconde phase débute lorsqu'un terminal MS, qui est associé à un profil d'usager désignant notamment les flux de service qu'il est autorisé à recevoir en mode de diffusion (broadcast) et en mode point-à-point (unicast), vient de se connecter à une station de base SB de cette même zone MBS ZM. Elle est destinée à fournir dynamiquement à cette station de base SB au moins la désignation des flux de service point-à-point que le terminal MS connecté est autorisé à recevoir en mode point-à-point. Cette station de base SB peut alors créer pour le terminal MS connecte des connexions point-à-point pour chacun de ces flux de service point-à-point désignés et transmettre au terminal MS connecté les données qui définissent au moins les flux de service qu'il est autorisé à recevoir en mode de diffusion pour qu'il puisse les recevoir au moyen des connexions de diffusion correspondantes, créées pendant la première phase.

On entend ici par « connexion point-à-point » une connexion destinée à transmettre en mode point-à-point un flux de service qui correspond à un contenu « unicast » d'une station de base SB vers un unique terminal MS qui est connecté à cette station de base SB. Les contenus « unicast » sont des contenus de type appel de voix ou internet par exemple exclusivement dédiés à un terminal par opposition aux contenus MBS qui sont diffusés à tous les terminaux autorisés de la zone MBS ZM. De même, on entend ici par « flux de service point-à-point » un flux de service empruntant une connexion point-à-point

Comme cela est schématiquement et non limitativement illustré sur la figure 1 (flèches F1), lors de la première phase c'est le serveur de service MBS SM de la zone MBS ZM considérée qui peut être l'élément de réseau chargé de transmettre à chacun des agents d'autorisation de flux de service AF, qui sont associés à sa zone MBS ZM. les données qui définissent les flux de service définissant les contenus MBS à diffuser dans cette zone MBS. On notera que ce serveur de service MBS SM peut également transmettre à chacun de ces agents d'autorisation de flux de service AF, de préférence en même temps que les données de flux de services, la liste des stations de base SB de la zone MBS ZM qu'il va devoir informer. Ces transmissions (flêches F1) se font au moyen de messages (ou requêtes) dédiés.

Les « données qui définissent un flux de service » constituent tout ou partie du « classificateur IP » (ou « IP Classifier ») de ce flux de service. Il est en effet rappelé qu'un classificateur IP d'un flux de service (i) est constitué au moins d'une paire d'informations de connexion de diffusion (CIDi) et de sécurité (SAi) <CIDi,SAi>, et d'une adresse de diffusion (« multicast IP @ Mi ») de ce flux de service (i) à diffuser, en tant qu'adresse de destination (adresse « multicast » - point-à-multipoints), ainsi qu'éventuellement d'un identifiant de zone (MBS_Zone_id) de la zone MBS ZM concernée, d'une adresse source (par exemple celle d'un serveur vidéo), et d'une classe de qualité de service (ou « QoS Class »).

Le mode de transmission précité est avantageux car c'est le serveur de service MBS SM qui connaît, d'une part, la table de correspondance (<CIDi,SAi> ↔ multicast IP @ Mi ) entre les paires d'informations <CIDi,SAi>, qui sont relatives respectivement aux différents flux de service (i) à diffuser, et les adresses de diffusion (multicast IP @ Mi) de ces flux de service (i) à diffuser, et d'autre part, la liste de stations de base SB qui est associée à chaque agent d'autorisation de flux de service AF de sa zone MBS ZM.

Lorsqu'un agent d'autorisation de flux de service AF a reçu les données de flux de service à diffuser (flèche F1), il transmet (flèche F2) ces données reçues à chaque station de base SB qu'il doit informer (et qui est désignée dans la liste qu'il a éventuellement reçue). Chaque transmission (flèche F2) se fait au moyen d'un(e) message (ou requête) dédié(e).

Lorsqu'une station de base SB a reçu les données de flux de service à diffuser (flèche F2), elle crée pour les terminaux MS, qui sont sous sa couverture radio, des connexions de diffusion CIDi pour chacun des flux de service (i) qui sont définis par ces données reçues. Dans l'exemple non limitatif illustré sur la figure 1, chaque station de base SB de la zone MBS ZM crée deux connexions de diffusion CID1 et CID2 pour les terminaux MS. Mais elles pourraient chacune en créer une seule ou bien plus de deux. Cela dépend en effet du nombre de contenus MBS à diffuser dans la zone MBS ZM.

Une fois que les stations de base SB ont terminé de créer les connexions de diffusion CIDi, la première phase est terminée.

Il est important de noter que la première phase peut être déclenchée soit au lancement du service MBS considéré, c'est-à-dire avant qu'un premier terminal MS ne se connecte à l'une des stations de base SB de la zone MBS ZM considérée, soit consécutivement à la connexion d'un premier terminal MS à l'une des stations de base SB de la zone MBS ZM considérée.

Dans la première situation, la seconde phase n'est déclenchée qu'une fois la première phase terminée.

Dans la deuxième situation, c'est par exemple l'agent d'autorisation de flux de service AF, qui est chargé de récupérer auprès du serveur de type AAA SA le profil (de QoS) de l'usager du premier terminal MS qui s'est connecté à l'une des stations de base SB qu'il contrôle, qui avertit de cette première connexion le serveur de service MBS SM de sa zone MBS ZM, afin qu'il initie la première phase. La seconde phase débute donc avant la première phase et se poursuit après la fin de la première phase.

Mais, quelle que soit la situation envisagée, et comme cela est schématiquement et non limitativement illustré sur la figure 2, lorsqu'un terminal MS se connecte à une station de base SB d'une zone MBS ZM (flèche F'1), l'agent d'autorisation de flux de service AF qui contrôle cette station de base SB récupère le profil (de QoS) de l'usager de ce terminal MS auprès du serveur de type AAA SA du réseau (flèche F'2).

Il est rappelé que le profil (de QoS) d'un usager désigne notamment les flux de service que cet usager est autorisé à recevoir en mode de diffusion et en mode point-à-point compte tenu de l'abonnement qu'il a souscrit auprès de l'opérateur du réseau.

Lorsqu'un agent d'autorisation de flux de service AF a récupéré le profil (de QoS) de l'usager du terminal MS qui s'est connecté, et que les stations de base SB qu'il contrôle ont créé les connexions de diffusion CIDi, il est en mesure de transmettre dynamiquement à la station de base SB (à laquelle le terminal MS s'est connecté) au moins la désignation des flux de service point-à-point que ce terminal MS est autorisé à recevoir en mode point-à-point (flèche F'3). Cette transmission (flèche F'3) se fait au moyen d'un(e) message (ou requête) dédié(e), comme par exemple une requête de type « Ressource Reservation » (ou RR-request - requête de réservation de ressources). Cette procédure réutilise les mécanismes standardisés pour communiquer aux stations de bases SB les désignations des flux de service point-à-point pré-provisionnés, lesquels sont notamment décrits dans le document du Forum WiMAX intitulé « Network Architecture - Stage 3 - Detailed Protocols and Procedures - Release 1.0.0 standard ».

On notera que l'agent d'autorisation de flux de service AF peut éventuellement et également transmettre dynamiquement à la station de base SB (à laquelle le terminal MS s'est connecté) la désignation des flux de service de diffusion que l'usager est autorisé à recevoir en mode de diffusion compte tenu de son profil d'usager récupéré. Cette transmission se fait alors de préférence au moyen de la même requête dédiée que celle utilisée pour fournir les désignations des flux de service point-à-point. Cela peut être notamment le cas lorsqu'un usager n'est autorisé à recevoir qu'une partie des contenus MBS qui sont diffusés dans la zone MBS ZM à laquelle il s'est connecté.

Comme indiqué précédemment, lorsque la station de base SB a reçu de son agent d'autorisation de flux de service AF les désignations des flux de service point-à-point et éventuellement les désignations des flux de service de diffusion qu'un usager est autorisé à recevoir, il crée pour le terminal MS de cet usager des connexions point-à-point pour chacun des flux de service point-à-point désignés. Puis, il transmet au terminal MS de cet usager les données qui définissent au moins les flux de service qu'il est autorisé à recevoir en mode de diffusion (flèche F'4). Pour ce faire, la station de base SB peut par exemple générer à destination du terminal MS un(e) unique message (ou requête) dédié(e) contenant les données qui définissent tous les flux de service que son usager est autorisé à recevoir en mode de diffusion. Mais, dans une variante illustrée de façon non limitative sur la figure 2, la station de base SB peut par exemple générer à destination du terminal MS autant de messages (ou requêtes) dédié(e)s qu'il y a de flux de service que son usager est autorisé à recevoir en mode de diffusion. Chaque requête contient alors les données qui définissent l'un des flux de service de diffusion. A titre d'exemple, chaque requête est de type « DSA-REQ » (« Dynamic Service Announcement - REQuest »). Par exemple, et comme illustré de façon non limitative sur la figure 2, chaque fois que te terminal MS reçoit de la station de base BS à laquelle il est connecté une requête contenant les données qui définissent au moins un flux de service de diffusion (flèche F'4), il génère un message de réponse à destination de cette station de base SB (flèche F'5). A titre d'exemple, chaque message de réponse est de type « DSA-RSP» (« Dynamic Service Announcement - ReSPonse »). En d'autres termes, si l'usager est autorisé à recevoir cinq contenus MBS différents, cinq paires de messages DSA-REQ et DSA-RSP sont échangées entre le terminal MS de cet usager et la station de base BS à laquelle il est connecté.

On notera que ces requêtes (ici de type DSA-REQ) sont transmises au terminal MS par la station de base BS alors même que les connexions CIDi correspondantes ont déjà été créées dans la première phase. En effet, comme un terminal MS peut se déplacer dans une zone MBS ZM sans faire de « handover » (procédure de transfert) entre les stations de base SB de cette dernière, toutes les stations de base SB de la zone MBS ZM, dans les couvertures radio desquelles il risque de se déplacer, doivent avoir préalablement créées les connexions de diffusion disponibles dans la zone MBS ZM. A son entrée dans le réseau, le terminal MS n'aura reçu que les informations relatives aux connexions de diffusion auxquelles il a souscrit et ne pourra écouter que celles-ci lors de son déplacement éventuel dans la zone MBS ZM. Cela ne nécessite pas d'adaptation des terminaux MS, mais seulement des stations de base SB.

Une fois que le terminal MS a reçu les données qui définissent les flux de service de diffusion qu'il est autorisé à recevoir il peut alors se configurer de manière à les recevoir au moyen des connexions de diffusion CIDi correspondantes que la station de base BS à laquelle il est connecté a créées pendant la première phase.

On notera qu'une fois que la station de base SB a fini de transmettre au terminal MS toutes les données qui définissent les différents flux de service qu'il est autorisé à recevoir en mode point-à-point et en mode de diffusion, elle peut éventuellement transmettre à l'agent d'autorisation de flux de service AF qui lui a transmis ces données (flèche F'4) un message dédié signalant que le terminal MS dispose desdites données (flèche F'6). Cette transmission (flèche F'6) se fait au moyen d'un message de réponse dédié, par exemple de type « Fake Ressource Réservation response » (ou Fake RR-response). Cela est destiné à simuler un échange classique de messages de type RR entre un agent d'autorisation de flux de service AF et une station de base SB.

On comprendra que les stations de base SB sont adaptées par rapport à celles de l'art antérieur de manière à offrir les fonctionnalités présentées ci-avant, qui permettent de mettre en oeuvre le procédé selon l'invention.

L'invention est particulièrement avantageuse car elle permet :
- aux agents d'autorisation de flux de service AF d'avoir à chaque instant une vision globale des flux de service ouverts,
- aux agents d'autorisation de flux de service AF d'estimer la quantité de trafic diffusé et son impact sur les liaisons radio et d'infrastructure, et ainsi de disposer d'informations additionnelles que leurs algorithmes de contrôle d'admission peuvent utiliser pour gérer le trafic point-à-point,
- aux agents d'autorisation de flux de service AF de mieux choisir le nombre de canaux vidéo de diffusion qui peuvent être simultanément utilisés et/ou de déclencher des alarmes en cas de congestion,
- de ne fournir aux terminaux MS que les données d'information relatives aux accès WiMAX (ou WLAN) dont ils ont effectivement besoin, évitant ainsi d'encombrer inutilement leur mémoire,
- d'offrir plus de flexibilité aux opérateurs des réseaux d'accès (par exemple cela permet de simplifier la différenciation des services offierts aux différents usagers et d'augmenter notablement les possibilités de gestion en ligne des souscriptions aux services diffusés (tels que les chaînes de télévision ou de radio),
- de faciliter le renouvellement périodique des clés de cryptage du trafic grâce aux informations de sécurité contenues dans les SA (« Security Association »),
- de réutiliser le cadre de création de flux de service pré-provisionnés déjà standardisé dans la norme 802.16e pour les services « unicast » (appel voix et internet, par exemple) avec l'utilisation de la procédure « Dynamic Service Addition » (DSA) qui est associée aux messages DSA-REQ et DSA-RSP, et ainsi d'éviter les modifications du terminal et de minimiser celles des stations de base.

L'invention ne se limite pas aux modes de réalisation de station de base et de procédé de fourniture de flux de service décrits ci-avant, seulement à titre d'exemple, mais elle englobe toutes les variantes que pourra envisager l'homme de l'art dans le cadre des revendications ci-après.

## Revendications

1. Procédé de fourniture de flux de service définissant des contenus MBS à diffuser, à des terminaux de communication (MS) situés dans une zone MBS (ZM) regroupant au moins une station de base (SB) d'un réseau local de communication sans fil, les procédé comprenant les étapes suivantes :
i) fournir aux stations de base (SB) de ladite zone MBS (ZM) des données définissant lesdits flux de service de sorte qu'elles créent pour lesdits terminaux (MS) des connexions de diffusion pour chacun desdits flux de service ;
ii) sur connexion d'un terminal (MS), associé à un profil d'usager désignant notamment des flux de service qu'il est autorisé à recevoir en mode de diffusion et en mode point-à-point, à une station de base (SB) de ladite zone MBS (ZM), fournir au moins la désignation des flux de service point-à-point à cette station de base (SB) de sorte que la station de base (SB) crée pour ledit terminal (MS) des connexions point-à-point pour chacun d'entre eux et qu'elle transmette audit terminal (MS) les données qui définissent au moins les flux de service qu'il est autorisé à recevoir en mode de diffusion pour qu'il puisse les recevoir au moyen des connexions de diffusion correspondantes, **caracterisé en ce que** certaines desdites données définissant les flux de service comportent au moins une table de correspondance entre des paires d'informations de connexion de diffusion (CID) et de sécurité (SA), relatives respectivement auxdits flux de service, et des adresses de diffusion.

2. Procédé selon la revendication 1, dans lequel au i), en présence d'une zone MBS (ZM) associée à un identifiant de zone, à un serveur de service MBS (SM) et à au moins un agent d'autorisation de flux de service (AF) couplé audit serveur de service MBS (SM), ledit serveur de service MBS (SM) transmet à chacun desdits agents d'autorisation de flux de service (AF) lesdites données définissant les flux de service qui définissent lesdits contenus MBS à diffuser et une liste de stations de base (SB) à informer, puis chaque agent d'autorisation de flux de service (AF) transmet ces données reçues à chaque station de base (SB) de la liste qu'il a reçue de sorte qu'elle crée pour lesdits terminaux (MS) des connexions de diffusion pour chacun desdits flux de service définis par lesdites données transmises.

3. Procédé selon la revendication 2, dans lequel certaines des données définissant les flux de service qui définissent lesdits contenus MBS à diffuser représentent ledit identifiant de zone de la zone MBS (ZM).

4. Procédé selon l'une des revendications 1 à 3, dans lequel on effectue le i) avant qu'un premier terminal (MS) ne se connecte à une station de base (SB) de ladite zone MBS (ZM).

5. Procédé selon l'une des revendications 1 à 3, dans lequel on effectue le i) consécutivement à la connexion d'un premier terminal (MS) à une station de base (SB) de ladite zone MBS (ZM).

6. Procédé selon l'une des revendications 1 à 5, dans lequel au ii), en présence d'une zone MBS (ZM) associée à un identifiant de zone, à un serveur de service MBS (SM) et à au moins un agent d'autorisation de flux de service (AF) couplé audit serveur de service MBS (SM), l'agent d'autorisation de flux de service (AF), qui est couplé à la station de base (SB) à laquelle s'est connecté ledit terminal (MS), détermine auprès d'un serveur de type AAA (SA) dudit réseau une liste désignant les flux de service que ledit terminal (MS) est autorisé à recevoir en mode de diffusion et en mode point-à-point, puis transmet les désignations des flux de service de cette liste à cette station de base (SB) de sorte qu'elle transmette audit terminal (MS) les données qui définissent les flux de service qu'il est autorisé à recevoir en mode de diffusion pour qu'il puisse les recevoir au moyen des connexions de diffusion correspondantes.

7. Procédé selon la revendication 6, dans lequel ledit agent d'autorisation de flux de service (AF) transmet à ladite station de base (SB) dans un message dédié la désignation d'un flux de service qu'il est autorisé à recevoir en mode de diffusion.

8. Procédé selon l'une des revendications 1 à 7, dans lequel ladite station de base (SB) transmet audit terminal (MS) les données qui définissent les différents flux de service qu'il est autorisé à recevoir en mode de diffusion au moyen de messages de requête successifs, et ledit terminal (MS) transmet à ladite station de base (SB) un message de réponse consécutivement à la réception de chaque message de requête reçu.

9. Procédé selon la revendication 8, dans lequel lesdits messages de requête sont de type « DSA-REQ » et lesdits messages de réponse sont de type « DSA-RSP ».

10. Procédé selon l'une des revendications 1 à 9, dans lequel une fois que ladite station de base (SB) a transmis audit terminal (MS) toutes les données définissant les différents flux de service qu'il est autorisé à recevoir en mode de diffusion, elle transmet audit agent d'autorisation de flux de service (AF) qui lui a transmis lesdites données un message dédié signalant que le terminal (MS) dispose desdites données.

11. Station de base (SB) pour une zone MBS (ZM) d'un réseau local de communication sans fil, comprenant des moyens agencés pour, en cas de réception de données définissant des flux de service définissant des contenus MBS à diffuser à des terminaux de communication (MS), certaines desdites données définissant les flux de service comportant au moins une table de correspondance entre des paires d'informations de connexion de diffusion (CID) et de sécurité (SA), relatives respectivement auxdits flux de service, et des adresses de diffusion, créer pour lesdits terminaux (MS) des connexions de diffusion pour chacun desdits flux de service, et en cas de réception de désignations de flux de service qu'un terminal (MS) est autorisé à recevoir en mode point-à-point, pour créer pour ce terminal (MS) des connexions point-à-point pour chacun desdits flux de service désignés et pour transmettre audit terminal (MS) les données qui définissent au moins les flux de service qu'il est autorisé à recevoir en mode de diffusion, de sorte qu'il puisse les recevoir au moyen des connexions de diffusion correspondantes.

12. Station de base selon la revendication 11, comprenant des moyens agencés pour transmettre audit terminal (MS) les données qui définissent les différents flux de service qu'il est autorisé à recevoir en mode de diffusion au moyen de messages de requête successifs, et pour recevoir dudit terminal (MS) des messages de réponse qu'il transmet consécutivement à la réception desdits messages de requête.

13. Station de base selon la revendication 12, comprenant des moyens agencés pour transmettre des messages de requête, pour les flux de service à diffuser, de type « DSA-REQ » et pour recevoir des messages de réponse de type « DSA-RSP ».

14. Station de base selon l'une des revendications 12 à 13, comprenant des moyens agencés pour, après avoir transmis audit terminal (MS) toutes les données définissant les différents flux de service qu'il est autorisé à recevoir en mode de diffusion, transmettre à un agent d'autorisation de flux de service (AF) dudit réseau, qui lui a transmis ces données, un message dédié signalant que le terminal (MS) dispose desdites données.

15. Serveur de service MBS (SM) pour une zone MBS (ZM) d'un réseau local de communication sans fil, ladite zone MBS comprenant au moins une station de base (SB) et associée à au moins un agent d'autorisation de flux de service (AF), comprenant des moyens agencés pour transmettre à chacun desdits agents d'autorisation de flux de service (AF) de ladite zone MBS (ZM) au moins des données définissant des flux de service qui définissent des contenus MBS à diffuser, **caracterisé en ce que** certaines desdites données définissant les flux de service comportent au moins une table de correspondance entre des paires d'informations de connexion de diffusion (CID) et de sécurité (SA), relatives respectivement auxdits flux de service, et des adresses de diffusion.

16. Serveur de service MBS selon la revendication 15, comprenant des moyens agencés pour transmettre à chacun desdits agents d'autorisation de flux de service (AF) de ladite zone MBS (ZM) une liste des stations de base SB de la zone MBS ZM auxquelles il va devoir transmettre lesdites données définissant les flux de service à diffuser.

17. Serveur de service MBS selon l'une des revendications 15 et 16, comprenant des moyens agencés pour transmettre lesdites données définissant les flux de service à diffuser à chacun desdits agents d'autorisation de flux de service (AF) de ladite zone MBS (ZM) avant qu'un premier terminal (MS) ne se connecte à une station de base (SB) de ladite zone MBS (ZM).

18. Serveur de service MBS selon l'une des revendications 15 et 16, comprenant des moyens agencés pour transmettre lesdites données définissant les flux de service à diffuser à chacun desdits agents d'autorisation de flux de service (AF) de ladite zone MBS (ZM), consécutivement à la connexion d'un premier terminal (MS) à une station de base (SB) de ladite zone MBS (ZM).

## Patentansprüche

1. Verfahren zur Bereitstellung eines Dienstflusses, welcher zu übertragende MBS-Inhalte definiert, an Kommunikationsendgeräte (MS), die sich in einem MBS-Bereich (ZM) mit mindestens einer Basisstation (SB) eines lokalen drahtlosen Kommunikationsnetzwerks befinden, wobei das Verfahren die folgenden Schritte umfasst :
i) Bereitstellen, an die Basisstationen (SB) des besagten MBS-Bereichs (ZM), von Daten, welche die besagten Dienstflüsse definieren, damit sie für die besagten Endgeräte (MS) Übertragungsverbindungen für einen jeden der besagten Dienstflüsse aufbauen;
ii) bei der Verbindung eines Endgeräts (MS), das mit einem Benutzerprofil assoziiert ist, welches insbesondere diejenigen Dienstflüsse bezeichnet, für deren Empfang es im Übertragungsmodus und im Modus Punkt-zu-Punkt berechtigt ist, mit einer Basisstation (SB) des besagten MBS-Bereichs (ZM), Bereitstellen zumindest der Bezeichnungen der Punkt-zu-Punkt-Dienstflüsse an diese Basisstation (SB), damit die Basisstation (SB) für das besagte Endgerät (MS) Punkt-zu-Punkt-Verbindungen für einen jeden davon aufbaut und Daten, welche zumindest diejenigen Dienstflüsse, zu deren Empfang im Übertragungsmodus es berechtigt ist, definieren, an das besagte Endgerät (MS) überträgt, damit es dieses über entsprechende Übertragungsverbindungen empfangen kann, **dadurch gekennzeichnet, dass** bestimmte der besagten Daten, welche die Dienstflüsse definieren, mindesten eine Tabelle mit der Entsprechung zwischen Übertragungsverbindungs- bzw. CID- und Sicherheits- bzw. SA- Informationspaaren, welche sich jeweils auf die besagten Dienstflüsse beziehen, sowie Übertragungsadressen beinhalten.

2. Verfahren nach Anspruch 1, wobei unter i), bei Vorhandensein eines MBS-Bereichs (ZM), welcher mit einer Bereichskennung, einem MBS-Dienstserver (SM) und mindestens einem an den besagten MBS-Dienstserver (SM) gekoppelten Dienstfluss-Berechtigungsagenten (AF) assoziiert ist, der besagte MBS-Dienstserver (SM) an einen jeden der besagten Dienstfluss-Berechtigungsagenten (AF) die besagten Daten, welche die Dienstflüsse, welche die besagten zu übertragenden MBS-Inhalte definieren, definieren, und eine Liste der zu informierenden Basisstationen (SB) überträgt, und jeder Dienstfluss-Berechtigungsagent (AF) diese empfangenen Daten anschließend an jede Basisstation (SB) der empfangenen Liste überträgt, damit sie für die besagten Endgeräte (MS) für einen jeden der besagten durch die übertragenen Daten definierten Dienstflüsse Übertragungsverbindungen aufbaut.

3. Verfahren nach Anspruch 2, wobei bestimmte der die Dienstflüsse, welche die besagten zu übertragenden MBS-Inhalte definieren, definierenden Daten die besagte Bereichskennung des besagten MBS-Bereichs (ZM) darstellen.

4. Verfahren nach einem der Ansprüche 1 bis 3, wobei man Schritt i) durchführt, bevor sich ein erstes Endgerät (MS) mit einer Basisstation (SB) des besagten MBS-Bereich (ZM) verbindet.

5. Verfahren nach einem der Ansprüche 1 bis 3, wobei man Schritt i) durchführt, nachdem sich ein erstes Endgerät (MS) mit einer Basisstation (SB) des besagten MBS-Bereichs (ZM) verbunden hat.

6. Verfahren nach einem der Ansprüche 1 bis 5, wobei man in Schritt ii), wenn ein mit einer Bereichskennung, einem MBS-Dienstserver (SM) und mindestens einem an den besagten MBS-Dienstserver (SM) gekoppelten Dienstfluss-Berechtigungsagenten (AF) assoziierte MBS-Bereich (ZM) vorhanden ist, der Dienstfluss-Berechtigungsagent (AF), welcher an diejenige Basisstation (SB) gekoppelt ist, mit welcher sich das besagte Endgerät (MS) verbunden hat, bei einem Server vom Typ AAA (SA) des besagten Netzwerks eine Liste ermittelt, welche diejenigen Dienstflüsse, zu deren Empfang im Übertragungsmodus und im Punkt-zu-Punkt-Modus das besagte Endgerät (MS) berechtigt ist, bezeichnet, und die Bezeichnungen der Dienstflüsse dieser Liste anschließend an diese Basisstation (SB) überträgt, damit diese die Daten, welche diejenigen Dienstflüsse, zu deren Empfang im Übertragungsmodus das besagte Endgerät (MS) berechtigt ist, definieren, an das besagte Endgerät (MS) überträgt, damit das besagte Endgerät (MS) diese über die entsprechenden Übertragungsverbindungen empfangen kann.

7. Verfahren nach Anspruch 6, wobei der besagte Dienstfluss-Berechtigungsagent (AF) die Bezeichnung eines Dienstflusses, zu dessen Empfang im Übertragungsmodus die besagte Basisstation (SB) berechtigt ist, in einer dedizierten Nachricht an die besagte Basisstation (SB) überträgt.

8. Verfahren nach einem der Ansprüche 1 bis 7, wobei die besagte Basisstation (SB) die Daten, welche die verschiedenen Dienstflüsse, zu deren Empfang im Übertragungsmodus das besagte Endgerät (MS) berechtigt ist, definieren, anhand von aufeinanderfolgenden an das besagte Endgerät (MS) überträgt und das besagte Endgerät (MS) im Anschluss an den Empfang einer jeden Anforderungsnachricht eine Antwortnachricht an die besagte Basisstation (SB) überträgt.

9. Verfahren nach Anspruch 8, wobei die besagten Anforderungsnachrichten vom Typ "DSA-REQ" und die besagten Antwortnachrichten vom Typ "DSA-RSP" sind.

10. Verfahren nach einem der Ansprüche 1 bis 9, wobei die besagte Basisstation (SB), sobald sie alle Daten, welche die verschiedenen Dienstflüsse, zu deren Empfang im Übertragungsmodus sie berechtigt ist, definieren, an das besagte Endgerät (MS) übertragen hat, eine dedizierte Nachricht, welche bestätigt, dass das Endgerät (MS) über die besagten Daten verfügt, an den Dienstfluss-Berechtigungsagenten (AF), welcher ihr die besagten Daten übertragen hat, sendet.

11. Basisstation (SB) für einen MBS-Bereich (ZM) eines lokalen drahtlosen Kommunikationsnetzwerk, mit Mitteln, die dazu ausgelegt sind, im Fall des Empfangs von Daten, welche Dienstflüsse, die an Kommunikationsendgeräte (MS) zu übertragende MBS-Inhalte definieren, definieren, wobei bestimmte der besagten Daten diejenigen Dienstflüsse, welche mindestens eine Tabelle mit der Entsprechung zwischen Übertragungsverbindungs- bzw. CID- und Sicherheits- bzw. SA- Informationspaaren, die sich jeweils auf die besagten Dienstflüsse beziehen, sowie Übertragungsadressen beinhalten, für die besagten Endgeräte (MS) Übertragungsverbindungen für einen jeden der besagten Dienstflüsse aufzubauen und, im Fall des Empfangs von Bezeichnungen derjenigen Dienstflüsse, zu deren Empfang im Punkt-zu-Punkt-Modus ein Endgerät (MS) berechtigt ist, für dieses Endgerät (MS) Punkt-zu-Punkt-Verbindungen für einen jeden der besagten bezeichneten Dienstflüsse aufzubauen und Daten, welche zumindest diejenigen Dienstflüsse definieren, zu deren Empfang im Übertragungsmodus das besagte Endgerät (MS) berechtigt ist, an das besagte Endgerät (MS) zu übertragen, damit es diese über entsprechende Übertragungsverbindungen empfangen kann.

12. Basisstation nach Anspruch 11, mit Mitteln, die dazu ausgelegt sind, die Daten, welche die verschiedenen Dienstffüsse, zu deren Empfang im Übertragungsmodus das besagte Endgerät (MS) berechtigt ist, definieren, anhand von aufeinanderfolgenden Anforderungsnachrichten an das besagte Endgerät (MS) zu übertragen, und von dem besagten Endgerät (MS) Antwortnachrichten zu empfangen, die sie im Anschluss an den Empfang der besagten Anforderungsnachrichten zu übertragen.

13. Basisstation nach Anspruch 12, mit Mitteln, die dazu ausgelegt sind, für die zu übertragenden Dienstflüsse Anforderungsnachrichten vom Typ "DAS-REQ" zu übertragen und Antwortnachrichten vom Typ "DAS-RSP" zu empfangen.

14. Basisstation nach einem der Ansprüche 12 bis 13, mit Mitteln, die dazu ausgelegt sind, nach Übertragen aller Daten, welche die verschiedenen Dienstflüsse, zu deren Empfang im Übertragungsmodus das besagte Endgerät berechtigt ist, definieren, an das besagte Endgerät (MS) eine dedizierte Nachricht, welche bestätigt, dass das besagte Endgerät (MS) über die besagten Daten verfügt, an einen Dienstfluss-Berechtigungsagenten (AF) des besagten Netzwerks, welcher ihr die Daten übertragen hat, zu übertragen.

15. MBS-Dienstserver MBS (SM) für einen MBS-Bereich (ZM) eines lokalen drahtlosen Kommunikationsnetzwerks, wobei der besagte MBS-Bereich mindestens eine Basisstation (SB), welche mit mindestens einem Dienstfluss-Berechtigungsagenten (AF) assoziiert ist, umfasst, mit Mitteln, die dazu ausgelegt sind, an einen jeden der besagten Dienstfluss-Berechtigungsagenten (AF) des besagten MBS-Bereichs (ZM) zumindest Daten, welche Dienstflüsse definieren, die zu übertragende MBS-Inhalte definieren, zu übertragen, **dadurch gekennzeichnet, dass** bestimmte der besagten Daten, welche die Dienstflüsse definieren, mindestens eine Tabelle mit der Entsprechung zwischen Übertragungsverbindungs- bzw. CID- und Sicherheits- bzw. SA- Informationspaaren, welche sich jeweils auf die besagten Dienstflüsse beziehen, sowie Übertragungsadressen beinhalten.

16. MBS-Dienstserver nach Anspruch 15, mit Mitteln, die dazu ausgelegt sind, an einen jeden der besagten Dienstfluss-Berechtigungsagenten (AF) des besagten MBS-Bereichs (ZM) eine Liste der Basisstationen SB des besagten MBS-Bereichs (ZM), an welche die besagten Daten, die die zu übertragenden Dienstflüsse definieren, zu senden sind, zu übertragen.

17. MBS-Dienstserver nach einem der Ansprüche 15 und 16, mit Mitteln, die dazu ausgelegt sind, die besagten Daten, welche die an einen jeden der besagten Dienstfluss-Berechtigungsagenten (AF) des besagten MBS-Bereichs (ZM) definieren, zu übertragen, bevor sich ein erstes Endgerät (MS) mit einer Basisstation (SB) des besagten MBS-Bereichs (ZM) verbindet.

18. MPBS-Dienstserver nach einem der Ansprüche 15 und 16, mit Mitteln, die dazu ausgelegt sind, die besagten Daten, welche die an einen jeden der besagten Dienstfluss-Berechtigungsagenten (AF) des besagten MBS-Bereichs (ZM) zu übertragenden Dienstflüsse definieren, zu übertragen, nachdem sich ein erstes Endgerät (MS) mit einer Basisstation (SB) des besagten MBS-Bereichs (ZM) verbunden hat.

## Claims

1. A method for providing service flows defining MBS content to be broadcast, to communication terminals (MS) located within an MBS zone (ZM) containing at least one base station (SB) of a local wireless communication network, which method comprises the following steps:
i) providing the base stations (SB) of said MBS zone (ZM) with data defining said service flows so that they create, for said terminals (MS), broadcast connections for each of said service flows.
ii) when a terminal (MS) associated with a user profile particularly designating service flows that it is authorized to receive in broadcast mode and in peer-to-peer-mode, becomes connected to a base station (SB) of said MBS zone (ZM), providing at least the designation of the peer-to-peer service flows to that base station (SB) so that the base station (SB) creates for said terminal (MS) peer-to-peer connections for each of them and that it transmits to said terminal (MS) the data defining at least the service flows that it is authorized to received in broadcast mode so that it can receive them by means of the corresponding broadcast connections, **characterized in that** some of said data defining the service flows comprises at least one lookup table that matches pairs of broadcast connection information (CID) and security information (SA), respectively related to said service flows, with broadcast addresses.

2. A method according to claim 1, wherein in i), in the presence of an MBS zone (ZM) associated with a zone identifier, an MBS service server (SM), and at least one service flow authorization agent (AF) coupled to said MBS service server (SM), said MBS service server (SM) transmits to each of said service flow authorization agents (AF) said data defining the service flows that define said MBS content to be broadcast and a list of base stations (SB) to inform, then each service flow authorization agent (AF) transmits that received data to each base station (SB) on the list that it had received, so that it creates for said terminals (MS) broadcast connections for each of said service flows defined by said transmitted data.

3. A method according to claim 2, wherein some of the data defining the service flows that define said MBS content to be broadcast represent said zone identifier of the MBS zone (ZM).

4. A method according to one of the claims 1 to 3, wherein i) is performed before a first terminal (MS) has connected to a base station (SB) of said MBS zone (ZM).

5. A method according to one of the claims 1 to 3, wherein i) is performed after a first terminal (MS) has connected to a base station (SB) of said MBS zone (ZM).

6. A method according to one of the claims 1 to 5, wherein in ii), in the presence of an MBS zone (ZM) associated with a zone identifier, an MBS service server (SM), and at least one service flow authorization agent (AF) coupled to said MBS service server (SM), the service flow authorization agent (AF), which is coupled to the base station (SB) to which said terminal is connected (MS), determined by asking an AAA server (SA) of said network a list designating the service flows that said terminal (MS) is authorized to received in broadcast mode and in peer-to-peer mode, then transmits the designations of the service flows on that list to that base station (SB) so that it transmits to said terminal (MS) the data that define the service flows that it is authorized to received in broadcast mode so that it can receive them by means of the corresponding broadcast connections.

7. A method according to claim 6, wherein said flow authorization agent (SB) transmits to said base station (SB) within a dedicated message the designation of a service flow that it is authorized to receive in broadcast mode.

8. A method according to one of the claims 1 to 7, wherein said base stations (SB) transmits to said terminal (MS) the data that define the different service flows that it is authorized to receive in broadcast mode by means of successive request messages, and said terminal (MS) transmits to said base station (SB) a response message after receiving each request message received.

9. A method according to claim 8, wherein said request messages are "DSA-REQ" messages and said response messages are "DSA-RSP" messages.

10. A method according to one of the claims 1 to 9, wherein once said base station (SB) has transmitted to said terminal (MS) all of the data defining the various service flows that it is authorized to receive in broadcast mode, it transmits to said service flow authorization agent (AF) that had transmitted said data to it a dedicated message reporting that the terminal (MS) has said data.

11. A base station (SB) for an MBS zone (ZM) of a local wireless communication network, comprising means operative, in the event that data is received defining service flows defining MBS content to be broadcast to communication terminals (MS), some of said data defining service flows comprising at least one lookup table that matches pairs of broadcast connection information (CID) and security information (SA), respectively related to said service flows, with broadcast addresses, to create for said terminals (MS) broadcast connections for each of said service flows, and in the event that service flow designations are received which a terminal (MS) is authorized to receive in peer-to-peer mode, to create for that terminal (MS) peer-to-peer connections for each of said designated service flows and to transmit to said terminal (MS) the data that define at least the service flows that it is authorized to receive in broadcast mode, so that it can receive them by means of the corresponding broadcast connections.

12. A base station according to claim 11, comprising means operative to transmit to said terminal (MS) the data that define the various service flows that it is authorized to receive in broadcast mode by means of successive request messages, and to receive from said terminal (MS) response messages that it transmits after receiving said request messages.

13. A base station according to claim 12, comprising means operative to transmit request messages, for the service flows to be broadcast, of the "DSA-REQ" type to receive response messages of the "DSA-RSP" type.

14. SA base station according to one of the claims 12 to 13, comprising means operative to, after having transmitted to said terminal (MS) all the data defining the different service flows that it is authorized to receive in broadcast mode, transmitting to a service flow authorization agent (AF) of said network, which had sent that data to it, a dedicated message reporting that the terminal (MS) has said data.

15. An MBS service server (SM) for an MBS zone (ZM) of a wireless local communication network, said MBS zone comprising at least one base station (SB) and associated with at least one service flow authorization agent (AF), comprising means operative to transmit to each of said service flow authorization agents (AF) of said MBS zone (ZM) at least data defining service flows that define MBS content to be broadcast, **characterized in that** some of said data defining service flows comprises at least one lookup table that matches pairs of broadcast connection information (CID) and security information (SA), respectively related to said service flows, with broadcast addresses.

16. An MBS service server according to claim 15, comprising means operative for transmitting to each of said service flow authorization agents (AF) of said MBS zone (ZM) a list of base station SB of the MBS zone (ZM) to which it must transmit said data defining the service flows to be broadcast.

17. An MBS service server according to one of the claims 15 and 16, comprising means operative to transmit said data defining the service flows to be broadcast to each of said service flow authorization agents (AF) of said MBS zone (ZM) before a first terminal (MS) connects to a base station (SB) of said MBS zone (ZM).

18. An MBS service server according to one of the claims 15 and 16, comprising means operative to transmit said data defining the service flows to be broadcast to each of said service flow authorization agents (AF) of said MBS zone (ZM) after a first terminal (MS) connects to a base station (SB) of said MBS zone (ZM).
